# EUROPÄISCHE PATENTANMELDUNG

(11) **EP 3 594 881 A1**
(43) Veröffentlichungstag der Anmeldung: **15.01.2020**
(21) Anmeldenummer: 19185731.7
(22) Anmeldetag: 11.07.2019
(51) Int. Cl.: G06Q 20/32, G06Q 20/38, G06Q 20/42

(54) **VERFAHREN ZUR DURCHFÜHRUNG AUTHENTIFIZIERTER ZAHLUNGEN MIT EINEM MOBILEN ENDGERÄT DES KÄUFERS**

(30) Priorität: 13.07.2018 DE 102018117038
(71) Anmelder: Hermanns, Matthias, 48149 Münster (DE)
(72) Erfinder: Hermanns, Matthias, 48149 Münster (DE)

(57) **Zusammenfassung**

Die vorliegende Erfindung betrifft ein Verfahren zur Durchführung authentifizierter Zahlungen mit einem mobilen Endgerät des Käufers, bei dem ein Identifikationscode des Verkäufers generiert wird, der neben dem Zahlungsbetrag die zur Durchführung der Zahlung notwendigen Informationen enthält, wobei der Informationscode mittels dem mobilen Endgerät eingelesen wird und mittels dem Endgerät die zur Durchführung der Zahlung notwendigen Informationen an die Empfangseinrichtung eines Zahlungsinstitutes geleitet werden, die die Zahlung durchführt. Das erfindungsgemäße Verfahren ist dadurch gekennzeichnet, dass der Identifikationscode zusätzlich Informationen zur Übersendung einer Bestätigungsinformation durch das Zahlungsinstitut an den Verkäufer oder an einen dem Verkäufer zugeordneten Empfänger enthält. Vorteilhaft wird zur Bestätigung der Durchführung der Zahlung durch ein Bestätigungssendesystem des Zahlungsinstituts die digitale Meldung an den Verkäufer oder an den dem Verkäufer zugeordneten Empfänger gesendet wird.

## Beschreibung

### Technisches Gebiet

Die vorliegende Erfindung betrifft ein Verfahren zur Durchführung authentifizierter Zahlungen mit einem mobilen Endgerät des Käufers gemäß dem Obersatz des Patentanspruchs 1.

### Stand der Technik

Es ist aus dem Stand der Technik bekannt, bei der Durchführung einer authentifizierter Zahlung Identifikationscodes des Verkäufers zu generieren, die neben dem Zahlungsbetrag die zur Durchführung der Zahlung notwendigen Informationen enthalten, wobei der Informationscode mittels eines mobilen Endgeräts eingelesen wird und mittels dem Endgerät die zur Durchführung der Zahlung notwendigen Informationen an die Empfangseinrichtung eines Zahlungsinstitutes geleitet werden, die schließlich die Zahlung durchführt. Hierzu werden teilweise Zahlungsapps eingesetzt, welche in gleicher Weise (bzw. demselben Anbieter) sowohl auf Seite des Käufers als auch des Verkäufers vorgesehen sein müssen.

Es ist weiterhin mittlerweile Standard, dass sog. Freigabemitteilung bei digitalen Währungen wie Bitcoins oder anderen Zahlungsinstrumenten gesendet werden. Die Dauer bis zur ersten Bestätigung durch das Bitcoin-Netzwerk beträgt in der Regel um die 10 Minuten, gelegentlich überschreitet sie aber auch 200 Minuten. Als höchstwahrscheinlich sicher gilt die Transaktion aber erst ab sechs Bestätigungen, also im Durchschnitt nach einer Stunde. Dies schränkt die Nutzbarkeit des Zahlungsinstruments für den Handel erheblich ein.

### Darstellung der Erfindung

Der vorliegenden Erfindung liegt die Aufgabe zu Grunde, ein Verfahren zu schaffen, welches die vorgenannten Probleme ausräumt und das es erlaubt, ein offenes System zu erhalten, bei dem der Verkäufer nicht zwingend dieselbe Zahlungsapp (bzw. denselben Anbieter) wie der Käufer haben muss.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Erfindungsgemäß ist ein Verfahren der eingangs genannten Art dadurch gekennzeichnet, dass der Identifikationscode zusätzlich Informationen zur Übersendung einer Bestätigungsinformation durch das Zahlungsinstitut an den Verkäufer oder an einen dem Verkäufer zugeordneten Empfänger enthält.

Als Identifikationscodes werden nachstehend vornehmlich Codes verwendet, mithilfe derer Informationen über Waren und dergleichen in einer Darstellung unterschiedlich ausgeführter 2-D-Formen (bspw. Streifen, Punkte, etc.) dargestellt werden (bspw. EAN- oder QR-Codes). Selbstverständlich kommen hier sämtlche weitere Darstellungsformen von Codes in Betracht, die über ein Bilderfassungssystem einlesbar sind.

Die zur Durchführung der Zahlung notwendigen Informationen sind hierbei vornehmlich eine Bankverbindung, der Name des Bankinhabers (Verkäufers), der Verwendungszweck sowie der Überweisungsbetrag, wobei darüber hinaus zusätzliche Informationen enthalten sein können, wie nachstehend zu erörtern sein wird.

Als zusätzliche Informationen zur Übersendung einer Bestätigungsinformation seien nachstehend sämtliche für einen elektronischen Datenaustausch bzw. für eine elektronische Datenübertragung notwendigen Empfängerdaten bezeichnet, die notwendig sind, um dem Verkäufer oder dem Empfänger eine elektronische Benachrichtigung zukommen lassen zu können.

Hierzu zählen bspw. aber nicht abschließend E-Mail-Adressen so wie Telefonnummern (zwecks Übersendung einer SMS, MMS oder weiteren Nachricht). Darüber hinaus kommen für den elektronischen Datenaustausch (EDI) aber auch spezielle Anwendungssysteme in Betracht, wie sie bspw. zwischen Unternehmen oder durch Normierungsvorschläge von Branchenverbänden wie Marktplätzen und VANs entwickelt werden.

Verfahrensmäßig wird vorteilhafterweise zur Bestätigung der Durchführung der Zahlung durch ein Bestätigungssendesystem des Zahlungsinstituts die digitale Meldung an den Verkäufer oder an den dem Verkäufer zugeordneten Empfänger gesendet.

In einer vorteilhaften Ausführungsform der Erfindung scannt hierzu eine Bezahl-App einen QR-Code des Verkäufers ein, der neben dem Betrag und der Bankverbindung (oder alternativ der Bitcoin-Adresse) zusätzlich auch die E-Mail-Adresse des Verkäufers enthält. Wenn der Käufer die Bezahlung per Lastschrift ausführt, erhält der Verkäufer eine Nachrichthierüber per Mail, so dass er das Produkte unbesorgt übergeben/versenden kann.

### Kurzbeschreibung der Zeichnung

Weitere Ziele, Merkmale, Vorteile und Anwendungsmöglichkeiten des erfindungsgemäßen Verfahrens ergeben sich aus der nachfolgenden Beschreibung eines Ausführungsbeispiels. Dabei bilden alle beschriebenen Merkmale für sich oder in beliebiger Kombination den Gegenstand der Erfindung, unabhängig von der Zusammenfassung in einzelnen Ansprüchen oder deren Rückbeziehung.

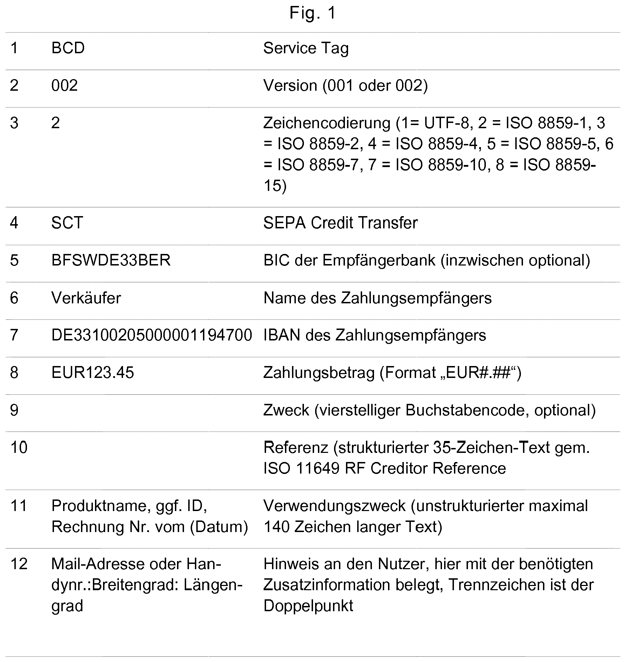

In der Zeichnung zeigt
Fig. 1 eine Übersicht über den bevorzugten Inhalt einer SEPA-Überweisung.

### Ausführung der Erfindung

Wie aus Fig. 1 ersichtlich, umfasst der QR-Code für Bankverbindungen vorzugsweise den zwingenden Inhalt einer SEPA-Überweisung nach dem Standard des EPC-QR-Codes, jedoch zzgl. der E-Mail-Adresse in Feld 12, wobei das "@"-Zeichen durch (a) oder (at) ausgetauscht wird. Der Standort wird als Breitengrad und Längengrad in Dezimalformat mit fünf Nachkommastellen angegeben.

Als Zeilentrenner dient in beiden Fällen der Zeilenumbruch "\n". Innerhalb der Zusatzangaben ist Trennzeichen der Doppelpunkt, der keinerlaubter Bestandteil der E-Mail-Adresse und kein üblicher Teil einer Handynummer ist, aber erlaubtes Zeichen einer SEPA-Überweisung darstellt.

Wenn der Käufer nun die Bezahlung per Lastschrift ausführt, erhält der Verkäufer eine Nachricht hierüber per E-Mail oder aber eine (Premium-)SMS, so dass er das Produkte unbesorgt übergeben/versenden kann.

Bei Distanzverkäufen wird für die Übertragung per elektronischen Datenverkehr vorher vorteilhafterweise ein Schlüsselaustausch (openPGP) vorgeschaltet, um die Nachricht gegen Falschmeldungen abzusichern.

Ob ein Distanzgeschäft vorliegt, erkennt das Zahlungsdienstesystem des Verkäufers vorzugsweise anhand der Standortinformationen des Zahlungsdienstleistungssystems auf der einen und der Informationen im Identifikationscode auf der anderen Seite. Die Sicherheitseinschränkung über den Standort und nicht über ein Zeitfenster, wie es sonst üblich ist, hat dabei den Vorteil, dass der Identifikationscode auch ausgedruckt und im Laden an das Produkt geklebt werden kann.

Der Verkäufer erhält vorzugsweise innerhalb kurzer Zeit eine Freigabemitteilung, die sowohl als Mitteilung, aber auch als optisches, akustisches oder haptisches Signal generiert sein kann. Diese fehlt ansonsten bei Überweisungen auf einen EPC-QR-Code.

Zugleich ist das vorliegende Verfahren offen für verschiedene Zahlungsinstrumente. Im QR-Code kann wahlweise eine Bankverbindung oder ein Bitcoin-Konto oder auch ein BCH-Konto stehen. Wird ein Bitcoin-Konto verwendet, rechnet die Zahlungsapp anhand einer API-Verbindung zu einer Börse wie bitcoin.de den Gegenwert in EUR zzgl. der Kosten aus und zeigt dem Käufer diesen Gesamtbetrag als Kaufpreis unter Angabe der darin enthaltenen Kosten an.

Solange der Verkäufer keinen Rahmenvertrag mit dem Zahlungsdienstleister abgeschlossen hat, muss der Käufer systembedingt die Kosten des Zahlungsdienstes tragen und sieht den entsprechenden Mehrpreis in der auf seinem Handy installierten Zahlungsapp ausgewiesen.

Wenn der Verkäufer hingegen, z.B. anlässlich des Schlüsselaustauschs, außerdem einen Rahmenvertrag mit dem Zahlungsdienstleister über die Kostentragung abgeschlossen hat, übernimmt er selbst die Kosten des Zahlungsdienstes und sie werden ihm entweder separat in Rechnung gestellt oder er zahlt einmalig mit einer Premium-SMS für das Zustandekommen des jeweiligen Garantievertrags analog § 305 BGB (vgl. vormals EC-Scheckgarantie) und die Kosten des Zahlungsdienstes. Auf diese Weise kann dem Marktgebot Rechnung getragen werden, dass der Käufer nicht mit den Kosten des Zahlungsmittels belastet werden möge.

Das vorliegende Verfahren erlaubt es auch, dass der Zahlungsdienstleister einen ihm bislang unbekannten Verkäufer kostenlose Proben seiner Zahlungsfunktion anbieten und ihm z.B. erst ab der fünften Nutzung einen zwingenden Rahmenvertrag auferlegen kann, ohne den keine Nachrichten mehr an die im QR-Code ausgewiesene Mailadresse geschickt werden.

Umgekehrt kann der Verkäufer, indem er nur seine Handynummer angibt, für jeden Kaufvorgang einzeln entscheiden, ob er per Premium-SMS für die Garantie der Zahlung durch den Zahlungsdienstleister den dafür ausgewiesenen Preis zahlen will, oder ob er auf die Worte seines Käufers vertraut, die Überweisung werde ausgeführt.

Das erfindungsgemäße Verfahren beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

## Patentansprüche

1. Verfahren zur Durchführung authentifizierter Zahlungen mit einem mobilen Endgerät des Käufers, bei dem ein Identifikationscode des Verkäufers generiert wird, der neben dem Zahlungsbetrag die zur Durchführung der Zahlung notwendigen Informationen enthält, wobei der Informationscode mittels dem mobilen Endgerät eingelesen wird und mittels dem Endgerät die zur Durchführung der Zahlung notwendigen Informationen an die Empfangseinrichtung eines Zahlungsinstitutes geleitet werden, die die Zahlung durchführt, **dadurch gekennzeichnet, dass** der Identifikationscode zusätzlich Informationen zur Übersendung einer Bestätigungsinformation durch das Zahlungsinstitut an den Verkäufer oder an einen dem Verkäufer zugeordneten Empfänger enthält.

2. Verfahren nach Anspruch 1,
**dadurch gekennzeichnet, dass**
zur Bestätigung der Durchführung der Zahlung durch ein Bestätigungssendesystem des Zahlungsinstituts die digitale Meldung an den Verkäufer oder an den dem Verkäufer zugeordneten Empfänger gesendet wird.

3. Verfahren nach Anspruch 1 oder 2,
**dadurch gekennzeichnet, dass**
bei Distanzgeschäften der Sendung der Bestätigungsinformation ein Schlüsselaustausch vorgeschaltet ist.

4. Verfahren nach einem der vorangegangenen Ansprüche,
**dadurch gekennzeichnet, dass**
durch die Sendung der Bestätigungsinformation ein dem Verkäufer zugängliches optisches, akustisches oder haptisches Signal generiert wird.

5. Verfahren nach einem der vorangegangenen Ansprüche,
**dadurch gekennzeichnet, dass**
zur Erkennung eines Distanzgeschäftes Standortinformationen des Verkäufers und/oder des Käufers auf der einen und/oder Informationen im Informationscode ausgewertet werden.

6. Verfahren nach einem der vorangegangenen Ansprüche,
**dadurch gekennzeichnet, dass**
die digitale Meldung eine E-Mail oder eine bestätigende SMS oder eine gleichartig gestaltete digitale Mitteilung ist, die weiterhin detaillierte Informationen zum Kauf einschließlich Gegenstand, Kaufpreis, Ort und/oder Zeit enthält.
